**Europäisches Patentamt**

**European Patent Office**

**Office européen des brevets**

(19)

(11) Veröffentlichungsnummer : **0 406 730 B1**

(12) # EUROPÄISCHE PATENTSCHRIFT

(45) Veröffentlichungstag der Patentschrift :
**01.04.92 Patentblatt 92/14**

(51) Int. Cl.$^5$ : **F02F 11/00, F16J 15/12**

(21) Anmeldenummer : **90112487.5**

(22) Anmeldetag : **29.06.90**

(54) **Zylinderkopfdichtung.**

(30) Priorität : **06.07.89 DE 3922284**

(43) Veröffentlichungstag der Anmeldung :
**09.01.91 Patentblatt 91/02**

(45) Bekanntmachung des Hinweises auf die
Patenterteilung :
**01.04.92 Patentblatt 92/14**

(84) Benannte Vertragsstaaten :
**DE FR GB IT**

(56) Entgegenhaltungen :
**DE-A- 2 228 155**
**DE-A- 3 425 075**

(73) Patentinhaber : **REINZ-DICHTUNGS-GMBH**
**Reinzstrasse 3-7**
**W-7910 Neu-Ulm (DE)**

(72) Erfinder : **Hieble, Franz**
**Holderstrasse 6**
**W-7913 Senden-Aufheim (DE)**

(74) Vertreter : **Heim, Hans-Karl, Dipl.-Ing. et al**
**c/o Weber & Heim Hofbrunnstrasse 36**
**W-8000 München 71 (DE)**

## Beschreibung

Die Erfindung betrifft eine Zylinderkopidichtung mit einer Sichtungsplatte, die mindestens zwei nebeneinanderliegende und durch einen Steg getrennte Durchtrittsöffnurgen aufweist, sowie mit metallischen, ringförmigen Bewehrungen der Durchtrittsöffnungen und mit einer im Stegbereich angeordneten metallischen, plättchenartigen Verstärkung.

Aus der DE 34 25 075 A1 ist eine Zylinderkopfdichtung der gattungsgemäßen Art bekannt, bei der zwischen den Dichtflächen benachbarter Brennraumöffnungen ein- oder beidseitig Bleche angeordnet sind, die mit den Dichtflächen haftfest verbunden sind. Aufgrund der starken mechanischen und insbesondere thermischen Beanspruchung der entsprechenden Teile der Zylinderkopfdichtung in dem verengten Stegbereich zwischen den Brennraumöffnungen besteht die Gefahr einer vorzeitigen Materialermüdung der Bleche und Dichtflächen.

Die Sichtungsplatten derartiger Zylinderkopfdichtungen bestehen üblicherweise aus einem Weichstoffmaterial, das mit einem metallischen Träger verstärkt sein kann. Es sind auch ganzmetallische Dichtungsplatten bekannt. Die Dichtungsplatte mut sich unter Dichtpressung soweit verformen, daß im eingebauten Zustand in einer Verbrennungskraftmaschine die zur Abdichtung notwendige Anpassung an die Dichtflächen erreicht wird. Die im Querschnitt U-förmig über den Offnungsrand gebogenen Einfassungen, welche die Abdichtung gegen die hohen Brennraumdrücke gewährleisten müssen, dienen hierbei zur Erzeugung einer örtlich erhöhten Flächenpressung. Außerdem hat die Einfassung die Aufgabe, das Weichstoffmaterial gegen die heißen Verbrennungsgase abzuschirmen.

Die kompakte Motorbauweise der heute üblichen Verbrennungsmotoren führt zu geringen Abständen der Durchtrittsöffnungen bzw. der Zylinder, und somit verbleiben nur geringe Stegbreiten. Diese führen dazu, daß sich das Dichtungsmaterial dort stärker setzt als in den übrigen Bereicher., d.h. die Flächenpressung fällt ab und es besteht die Gefahr eines Gasaustausches zwischen den Zylihdern. Dies kann zur Zerstörung der Dichtungen. in diesem Bereich und damit zum Motorausfall führen.

Man begegnet diesem Effekt durch Erhöhung der Dichtungsdicke und des metallischen Anteils in den thermish gefährdeten Stegbereichen mit Hilfe der plättchenartigen Verstärkung, die auch als Zwickel bezeichnet werden kann. Auch findet durch das Metall eine bessere Wärmeabfuhr zu den benachbarten Bauteilen hin statt. Allen bekannten Lösungen ist gemeinsam, daß die Verstärkungen eine konstante Dicke aufweisen, wobei sich die jeweilige Dicke, die Position und die an die Stegformen angepaßte Geometrie nach motorspezifischen Gegebeheiten richtet. An den stirnseitigen Enden der Verstärkungen entsteht eine der Dicke der Verstärkungen entsprechende abrupte Abkantung, was im Einbauzustand zu einem sprunghaften Pressungsabfall bzw. im Extremfall zu einem Spalt zwischen den Dichtflächen führt.

Ein weiterer Nachteil der bekannten Verstärkungen ist, daß sich - bedingt duch die vorgegebene Geometrie der abgedicteten, mittels Zylinderkopfschrauben aneinander gepreßten Motorteile - bevorzugt der Zylinderkopf an der flächigen Verstärkung im Stegbereich abstützt und dort zu einer Pressenreduzierung führt.

Der Erfindung liegt di **Aufgabe** zugrunde, eine Zylinderkopfdichtung der eingangs genannten Art anzugeben, welche im Stegbereich eine verbesserte Dichtwirkung aufweist.

Diese Aufgabe wird bei einer Zylinder kopfdichtung der gattungsgemäßen Art durch die kennzeichnenden Merkmale des Anspruchs 1 gelöst.

Die Erfindung hat den Vorteil, daß die Pressenkonzentration gezielt in der Weise verteilt wird, daß ein im wesentlichen kontinuierlicher Übergang zwischen der Verstärkung und den übrigen Bereichen erreicht wird. Grundsätzlich erscheint es ausreichend, daß die Abflachung der Verstärkung nur einer Seite erfolgt, wenngleich eine beidseitige Querschnittsabnahme besonders vorteilhaft ist.

Anstelle einer kontinuierlichen Querschnittsverjüngung kann es zweckmäßig sein, daß die Verstärkung abgestuft ist. Diese Weiterbildung hat den Vorteil, daß die Verstärkung durch Blechschichtungen auf einfache Weise hergestellt werden kann.

Hierbei besteht eine bevorzugte Weiterbildung darin, daß die Verstärkung aus einem Blechgrundkörper mit umgefalzten Rändern besteht, die kürzer sind als der Blechgrundkörper.

Insbesondere bei Motoren, welche im Stegbereich zur Zylinderkühlung einen Längsschlitz aufweisen, ist es vorteilhaft, daß die in Längsrichtung umgefalzten Ränder zur Bildung des Schlitzes in einem vorgegebenen Abstand voneinander enden.

Alternativ zu den längsgefalzten Rändern besteht eine besondere Ausgestaltung der Erfindung darin, daß zumindest an einer Stirnseite ein umgefalzter, schmaler Positionier- und Halterungssteg für eine Auflage im Bereich der größten Stegverengung vorhanden ist. Um eine beidseitige Auflage herzustellen, ist es zweckmäßig, an beiden Stirnseiten einen entgegengesetzt umgefalzten Positionier- und Halterunssteg mit Auflage vorzusehen.

Alle derartigen mit einem Falz versehenen Ausführungsformen haben den Vorteil, daß die Verstärkung auf einfache Weise einstückig durch Stanzung und Umfalzung hergestellt werden kann.

2

Eine andere Weiterbildung der Erfindung besteht darin, daß die ringförmige Bewehrung der Durchtrittsöffnungen im Stegbereich mit einer entsprechend ausgeformten Verbreiterung versehen ist, die sinngemäß wie die vorstehenden Ausführungsbeispiele durch Umfalzung zu einer schichtweise aufgebauten Verstärkung ausgebildet sind.

Nachfolgend wird die Erfindung anhand von mehreren in der Zeichnung dargestellten Ausführungsbeispielen weiter beschrieben.

Fig. 1 zeigt schematisch eine Draufsicht auf einen Teil einer Zylinderkopfdichtung;

Fig. 2 bis 4 zeigen schematisch einen Querschnitt entlang der Schnittlinie II-II durch den verstärkten Stegbereich der Zylinderkopfdichtung gemäß Fig. 1 für drei verschiedene Beispiele;

Fig. 5 zeigt eine Draufsicht auf ein erstes Beispiel einer gefalzten Verstärkung;

Fig. 6 zeigt einen Querschnitt durch die Verstärkung gemäß Fig. 5 entlang der Schnittlinie VI-VI;

Fig. 7 zeigt schematisch eine Draufsicht auf ein zweites Beispiel einer gefalzten Verstärkung und

Fig. 8 zeigt eine Seitenansicht der Verstärkung gemäß Fig. 7.

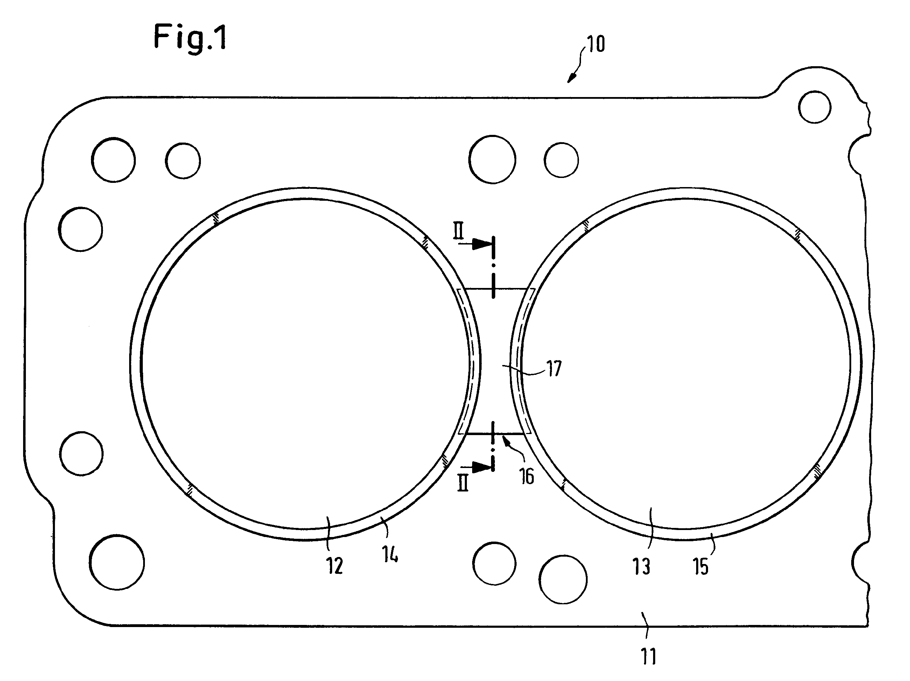

Die in Fig. 1 veranschaulichte Zylinderkopfdichtung 10 besteht aus einer Dichtungsplatte 11 aus Weichstoffmaterial, die mit zweinebeneinander liegenden Durchtrittsöffnungen 12, 13 versehen ist. Die Ränder der Durchtrittsöffnungen 12, 13 sind mit metallischen, im Querschnitt U-förmigen Brennraumeinfassungen (Bewehrungen) 14, 15 versehen.

Zwischen den beiden Durchtrittsöffnungen 12, 13 verläuft ein Steg 16, auf welchen eine metallische Verstärkung 17 aufgelegt ist, deren in Längsrichtung verlaufenden Ränder an die Form der Durchtrittsöffnungen 12, 13 bzw. Brennraumeinfassungen 14, 15 angepaßt ist. Die Verstärkung 17 wird von den überstehenden U-Schenkeln der Brennraumeinfassungen 14 und 15 gehalten.

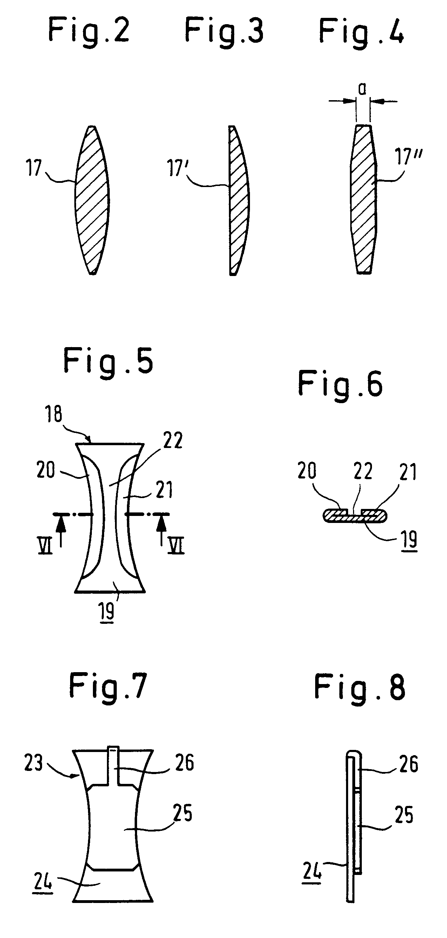

Der Querschnitt der Fig. 2 veranschaulicht für ein erstes Beispiel, daß die Verstärkung 17 in Steglängsrichtung einen sich auf die Enden zu verjüngenden Querschnitt aufweist. Die stärkste Dicke liegt im Bereich der größten Stegverengung. In der Breite, d.h. senkrecht zur Zeichenebene, ist der Querschnitt jeweils konstant.

Bei dem in Fig. 3 dargestellten zweiten Beispiel einer Verstärkung 17' erfolgt die Balligkeit lediglich einseitig. Die Wölbung befindet sich auf der dem Steg 16 (Fig .1) abgewandten Seite. Fig. 4 zeigt ein drittes Beispiel einer Verstärkung 17'', die im Mittenbereich an der größten Stegverengung eine im wesentlichen gleichbleibende Dicke hat. Die Dickenabnahme erfolgt auf die Ränder zu beidseitig linear bis zu einer vorgegebenen Restdicke a.

Das vierte Beispiel einer Verstärkung 18 gemäß Fig. 5 und 6 besteht aus einem Blechgrundkörper 19 gleichmäßige Dicke, dessen Ränder zur Querschnittsverdickung umgefalzt sind. Die Falze 20, 21 sind kürzer als der Blechgrundkörper, so daß sich auf die Ränder zu eine stufige Verjüngung um die Blechstärke ergibt. Außerdem enden die gegenüberliegenden Ränder der Falze 20, 21 in einem vorgegebenen Abstand voneinander, so daß sie einen Schlitz 22 bilden, welcher zur Kühlung des Stegs 16 dient. Durch die Formgebung der Falze 20, 21 läßt sich im übrigen die Pressung gezielt auf die verbleibenden Flächen der benachbarten Teile konzentrieren.

Das fünfte Beispiel einer Verstärkung 23, wie sie die Fig. 7 und 8 zeigen, weist ebenfalls einen Blechgrundkörper 24 konstanter Dicke auf. Er ist im Bereich der kritischen Stegverengung mit einer Auflage 25 versehen, die über einen Positionier- und Halterungssteg 26 mit einer Stirnseite des Blechgrundkörpers 24 verbunden ist.

Die Verstärkung 24 ist einstückig als Stanzteil mit einer Falzung am Fußpunkt des Positionier- und Halterungssteges 26 ausgebildet.

**Patentansprüche**

1. Zylinderkopfdichtung mit einer Dichtungsplatte, die mindestens zweinebeneinanderliegende und durch einen Steg getrennte Durchtrittsöffnungen aufweist, sowie mit metallischen, ringförmigen Bewehrungen der Durchtrittsöffnungen und mit einer im Stegbereich angeordneten metallischen, plättchenartigen Verstärkung, dadurch **gekennzeichnet**, daß die Dicke der Verstärkung (17,18,23) im Bereich der stärksten Verengung des Steges (16) am größten ist und von dort aus in dessen Längsrichtung zumindest einseitig, vorzugsweise kontinuierlich, abnimmt.

2. Zylinderkopfdichtung nach Anspruch 1, dadurch **gekennzeichnet**, daß die Dickenabnahme linear bis zu einer vorgegebenen Restdicke $(a)_x$ ist.

3. Zylinderkopfdichtung nach Anspruch 1, dadurch **gekennzeichnet**,

daß die Verstärkung (18) aus einem Blech-Grundkörper (19) mit in Längsrichtung verlaufenden Falzen (20,21) besteht, die kürzer sind als der Blech-Grundkörper (19).

4. Zylinderkopfdichtung nach Anspruch 3,
dadurch **gekennzeichnet**,
daß die in Längsrichtung verlaufenden Falze (20,21) zur Bildung eines Längsschlitzes (22) in einem vorgegebenen Abstand voneinander enden.

5. Zylinderkopfdichtung nach Anspruch 1,
dadurch **gekennzeichnet**,
daß die Verstärkung (23) aus einem Blech-Grundkörper (24) besteht, daß zumindest an einer Stirnseite des Blech-Grundkörpers (24) ein umgefalzter, schmaler Positionier- und Halterungssteg (26) für eine Auflage (25) im Bereich der größten Stegverengung vorhanden ist und
daß der Blech-Grundkörper (24), der Positionier- und Halterungssteg (26) und die Auflage (25) einstückig ausgebildet sind.

6. Zylinderkopfdichtung nach Anspruch 5,
dadurch **gekennzeichnet**,
daß an beiden Stirnseiten des Blech-Grundkörpers (24) Positionier- und Halterungsstege (26) mit Auflage (25) angeordnet und gegensinnig umgefalzt sind.

7. Zylinderkopfdichtung nach einem der Ansprüche 3 bis 6,
dadurch **gekennzeichnet**,
daß die Falze (20,21) bzw. die Auflagen (25) als Doppelfalze ausgebildet sind.

8. Zylinderkopfdichtung nach Anspruch 7,
dadurch **gekennzeichnet**,
daß die Schenkel der Doppelfalze unterschiedlich lang sind.

9. Zylinderkopfdichtung nach Anspruch 1,
dadurch **gekennzeichnet**,
daß die ringförmige Bewehrung (14,15) der Durchtrittsöffnungen (12,13) im Stegbereich mit einer entsprechend ausgeformten und umgefalzten Verbreiterung versehen ist.

## Claims

1. Cylinder head gasket with a gasket plate, which has at least two juxtaposed passage openings separated by a web, as well as metallic, circular reinforcing borders for the passage openings and a metallic, lamina-like reinforcement located in the web area,
**characterized** in that
the greatest thickness of the reinforcement (17, 18, 23) is in the vicinity of the greatest constriction of the web (16) and is from there decreasing in the web longitudinal direction at least at one side, preferably continuously.

2. Cylinder head gasket according to claim 1,
**characterized** in that
the thickness decrease is linear to a predetermined residual thickness $(a)_x$.

3. Cylinder head gasket according to claim 1,
**characterized** in that
the reinforcement (18) comprises a sheet metal body (19) with longitudinally directed folds (20, 21), which are shorter than said sheet metal body (19).

4. Cylinder head gasket according to claim 3,
**characterized** in that
the longitudinally directed folds (20, 21) have a predetermined spacing from one another for forming a longitudinal slot (22).

5. Cylinder head gasket according to claim 1,
**characterized** in that
the reinforcement (23) comprises a sheet metal body (24), wherein on one end face of said sheet metal body (24) is provided a crimped-over, narrow positioning and mounting web (26) for a support (25) in the vicinity of the greatest web constriction and wherein the sheet metal body (24), the positioning and mounting web (26) and the support (25) are constructed in one piece.

6. Cylinder head gasket according to claim 5,
**characterized** in that
the positioning and mounting webs (26) with support (25) are arranged and crimped over in opposite directions on both end faces of the sheet metal body (24).

7. Cylinder head gasket according to one of the claims 3 to 6,
**characterized** in that
the folds (20, 21) or supports (25) are constructed as double folds.

8. Cylinder head gasket according to claim 7,
**characterized** in that
the legs of the double folds have different lengths.

9. Cylinder head gasket according to claim 1,
**characterized** in that
the circular reinforcing borders (14, 15) of the passage openings (12, 13) are provided in the web area with a correspondingly shaped and crimped-over widened portion.


## Revendications

1. Joint de culasse comprenant une plaque d'étanchéité munie d'au moins deux orifices traversants, juxtaposés, séparés par une entretoise, avec des armatures annulaires, métalliques, pour les orifices traversants et un renforcement en forme de plaquette métallique prévu dans la zone de l'entretoise,
caractérisé en ce que :
l'épaisseur du renforcement (17, 18, 23) est la plus grande dans la zone du plus fort rétrécissement de l'entretoise (16) et à partir de là cette épaisseur diminue dans la direction longitudinale, au moins d'un côté, de préférence de manière continue.

2. Joint de culasse selon la revendication 1,
caractérisé en ce que
la diminution d'épaisseur est linéaire jusqu'à une épaisseur résiduelle $(a)_x$ prédéterminée.

3. Joint de culasse selon la revendication 1,
caractérisé en ce que
le renforcement (18) est un corps de base en tôle (19) avec des feuillures (20, 21) longitudinales, plus courtes que le corps de base en tôle.

4. Joint de culasse selon la revendication 3,
caractérisé en ce que
les feuillures (20, 21) dirigées dans la direction longitudinale, se terminent à une distance prédéterminée l'une de l'autre pour former une fente longitudinale (22).

5. Joint de culasse selon la revendication 1,
caractérisé en ce que
le renforcement (23) est réalisé en un corps de base (24) en tôle, ayant au moins sur une face frontale de ce corps de base en tôle (24), une entretoise étroite (26), rabattue, de positionnement et de fixation pour un revêtement (25) dans la zone du plus fort rétrécissement de l'entretoise et le corps de base en tôle (24), l'entretoise de positionnement et de fixation (26) et le revêtement (25) sont en une seule pièce.

6. Joint de culasse selon la revendication 5,
caractérisé en ce que
sur les deux faces du corps de base en tôle (24) on a des entretoises de positionnement et de fixation (26) avec revêtement (25) et qui sont rabattues en sens opposé.

7. Joint de culasse selon l'une des revendications 3 à 6,
caractérisé en ce que
la feuillure (20, 21) ou les revêtements (25) sont réalisés en forme de double feuillure.

8. Joint de culasse selon la revendication 7,
caractérisé en ce que
les branches de la double feuillure ont une longueur différente.

9. Joint de culasse selon la revendication 1,
caractérisé en ce que
l'armature annulaire (14, 15) des orifices traversants (12, 13) est munie dans la zone de l'entretoise, d'une partie élargie, de forme correspondante et rabattue.

# Fig.1

EP 0 406 730 B1

# Fig.2    Fig.3    Fig.4

# Fig.5

# Fig.6

# Fig.7

# Fig.8